# EUROPÄISCHE PATENTSCHRIFT

(11) **EP 3 366 929 B1**
(45) Veröffentlichungstag und Bekanntmachung des Hinweises auf die Patenterteilung: **13.05.2020**
(21) Anmeldenummer: 18156833.8
(22) Anmeldetag: 15.02.2018
(51) Int. Cl.: F04D 29/28, F04D 29/66

(54) **EINSTÜCKIGES GEBLÄSERAD**
ONE PIECE BLOWER WHEEL
ROUE DE VENTILATEUR EN UNE SEULE PIÈCE

(30) Priorität: 23.02.2017 DE 102017103774; 30.06.2017 DE 102017114682
(43) Veröffentlichungstag der Anmeldung: 29.08.2018
(73) Patentinhaber: ebm-papst Landshut GmbH, 84030 Landshut (DE)
(72) Erfinder: Dannemann, Jan, 23730 Neustadt in Holstein (DE); Weltzer, Jan, 84036 Landshut (DE)
(74) Vertreter: Staeger & Sperling Partnerschaftsgesellschaft mbB

(56) Entgegenhaltungen:
- EP-A1- 2 058 525
- EP-A1- 3 273 066
- US-A1- 2008 292 464

## Beschreibung

Die Erfindung betrifft ein einstückiges Gebläserad zur Verwendung in einem Gebläse, insbesondere einem Gas-Luft-Vormischgebläse.

Gebläseräder zur Verwendung in Gas-Luft-Vormischgebläsen sind aus dem Stand der Technik bekannt und weisen eine Bodenscheibe, eine Nabe zur Verbindung mit einem Rotor eines Elektromotors sowie optional eine Deckscheibe auf. Soweit eine Deckscheibe vorgesehen wird, erstreckt sich ein Schaufelkranz von in Umfangsrichtung beabstandet zueinander angeordneten Gebläseradschaufeln von der Bodenscheibe in Axialrichtung bis zur Deckscheibe, so dass zwischen Bodenscheibe und Deckscheibe ein radialer Ausblasabschnitt gebildet wird.

Im Betrieb kommt es zu schwingungstechnischen Interaktionen zwischen dem das Gebläserad antreibenden Rotor und dem Gebläserad selbst, die negativen Einfluss auf das Geräuschverhalten und die Luftleistung des Gebläserads haben können. In der Praxis wurde festgestellt, dass bei einer bestimmten Ordnung, insbesondere der 8. Ordnung der Torsionseigenfrequenz des Rotors eine Pumpbewegung des Gebläserads angeregt wird, die sich negativ auf die Luftleistung und das Geräuschverhalten auswirkt. Messungen haben bestätigt, dass eine deutliche Erhöhung der Schallleistung bei einer Drehzahl des Gebläserads auftritt, bei der die Torsionseigenfrequenz des Rotors liegt.

Druckschriftlicher Stand der Technik gemäß dem Oberbegriff des Hauptanspruchs ist offenbart in den Dokumenten US 2008/292464 A1 und EP 2 058 525 A1 .

Es ist deshalb die Aufgabe der Erfindung, ein Gebläserad bereit zu stellen, das eine geringere Anfälligkeit zur Pumpbewegung, insbesondere zu axialen Schwingungen im Bereich des Außendurchmessers, aufgrund von Einflüssen des antreibenden Rotors aufweist. Dabei sollen die strömungsmechanischen Eigenschaften (Luftleistung, Drehzahl, Wirkungsgrad) sowie einfache und wirtschaftliche Herstellbarkeit erhalten bleiben.

Die Aufgabe wird gelöst durch die Merkmalskombination gemäß Patentanspruch 1.

Erfindungsgemäß wird ein Gebläserad in einer einstückigen Ausführung mit einer Bodenscheibe und einer Deckscheibe vorgeschlagen, zwischen denen ein Schaufelkranz mit mehreren in Umfangsrichtung verteilt angeordneten Gebläseradschaufeln gebildet ist. Die Bodenscheibe bestimmt einen radialen maximalen Außendurchmesser da. Die Deckscheibe bildet eine axiale Ansaugöffnung mit einem Durchmesser di aus und weist einen maximalen Außendurchmesser dt auf. Dabei erstreckt sich die Deckscheibe von dem die Ansaugöffnung bildenden Umfangsrand nach radial außen.

Unabhängig von dem Gebläseraddurchmesser werden die vorteilhaften Effekte der reduzierten axialen Schwingungen während der Torsionseigenfrequenz und somit die verringerten Schallemissionen stets bei einem erfindungsgemäßen Gebläserad erzielt, das dadurch gekennzeichnet ist, dass die Trennung von Boden und Deckscheibe bei einem Verhältnis der Außendurchmesser dt/da festgelegt ist auf einen Wert von 0,69 oder 0,74 mit jeweils einer maximalen Abweichung von ±0,03.Der entsprechende Wert ist mithin allgemein anwendbar.

Geringe Veränderungen des Verhältnisses der Außendurchmesser dt/da haben wesentlichen Einfluss auf die Interaktion zwischen Rotor und Gebläserad und insbesondere bezüglich der Anregung zu axialen Schwingungen. Deshalb ist der erfindungsgemäße Bereich des Verhältnisses der Außendurchmesser dt/da gering und sogar durch eine spezielle Werteauswahl gekennzeichnet.

Die einstückige bzw. einteilige Ausführung des Gebläserads ermöglicht eine einfache Entformbarkeit bei der Herstellung im Kunststoffspritzguss sowie gute Spritzgusseigenschaften. Auch kann das Gebläserad kostengünstig im 3D-Druckverfahren hergestellt werden.

In einer vorteilhaften Ausführungsvariante des Gebläserads ist vorgesehen, dass sich die Gebläseradschaufeln ausgehend von dem Umfangsrand der Deckscheibe nach radial außen erstrecken und sich die axialen Stirnseiten der Gebläseradschaufeln auf einer der Bodenscheibe gegenüberliegenden Seite unbedeckt nach radial außen erstrecken und jeweils ein freies Ende aufweisen.

Ferner ist eine Ausführung vorteilhaft, bei der die Deckscheibe in einem Radialschnitt gesehen trichterförmig gekrümmt verläuft und eine Einlaufdüse bildet.

Für positive Spritzgusseigenschaften und eine reduzierte Neigung zur Schwingungsanregung ist eine Ausführung des Gebläserads günstig, bei der die Deckscheibe an dem Umfangsrand, der die Ansaugöffnung begrenzt, eine Dicke t aufweist, die einer Dicke t der Gebläseradschaufeln entspricht. Gleiche Wandstärken sind generell eine bevorzugte Lösung, so dass ferner günstig ist, wenn die Bodenscheibe zumindest an ihrem radialen Außenrand eine Dicke t aufweist, welche ebenfalls der Dicke t der Gebläseradschaufeln entspricht.

Schließlich wird in einer Weiterbildung vorgesehen, dass auch ein radialer Außenrand der Deckscheibe die Dicke t der Gebläseradschaufeln aufweist. Die Deckscheibe wie auch die Bodenscheibe können über ihre gesamte radiale Erstreckung eine konstante Materialdicke t aufweisen.

Ein weiterer positiver Aspekt zur Reduzierung der Gebläseradanregung und Schallemission der Gebläserad ergibt sich bei einer Ausführungsvariante, bei der ein Verhältnis des Durchmessers der axialen Ansaugöffnung di und des maximalen Außendurchmessers dt der Deckscheibe di/dt in einem Bereich von 0,5 bis 0,7 liegt. Die Ansaugöffnung macht demzufolge einen großen Anteil des Gesamtdurchmessers des Gebläserads aus, so dass die Radialerstreckung der Deckscheibe gering ist.

Ein wesentlicher Bereich für die axiale Schwingungsanregung ist der radiale Außenabschnitt des Gebläserads. Eine vorteilhafte Ausführung zu deren Verringerung sieht für das Gebläserad vor, dass die radialen Außenkanten der Gebläseradschaufeln in einer Ebene parallel zur Rotationsachse verlaufen und, dass die Bodenscheibe bündig in einer Ebene mit den radialen Außenkanten der Gebläseradschaufeln abschließt.

Radial innenseitig ist eine Ausführung des Gebläserads vorteilhaft, bei der die Gebläseradschaufeln auf ihren radialen Innenseiten in die Nabe des Gebläserads übergehen. Die radialen Innenkanten der Gebläseradschaufeln können dabei im Querschnitt gesehen bogenförmig verlaufen, so dass sie eine zur Ansaugöffnung weisenden gerundeten Verlauf aufweisen.

Ferner ist günstig, wenn sich der radial äußerste Abschnitt der Deckscheibe und der Bodenscheibe parallel zu einer Axialebene erstrecken, d.h. sich geradlinig nach radial außen erstrecken.

Zur Herstellung ohne Schieber ist bei dem Gebläserad eine Ausführung günstig, bei der sich die Bodenscheibe und die Deckscheibe in einer axialen Draufsicht, in der Projektion gesehen, überlappungsfrei zueinander erstrecken.

Die Erfindung umfasst ferner ein Gebläse ausgebildet als Gas-Luft-Vormischgebläse zur Förderung eines Gas-Luft-Gemisches, mit einem mehrteiligen Gebläsegehäuse und einer außenseitig angeordneten Motoreinheit mit Motorelektronik, wobei innerhalb des Gebläsegehäuses ein Gebläserad mit den vorstehend beschriebenen Merkmalen angeordnet ist, das im Betrieb Luft über eine Ansaugöffnung des Gebläsegehäuses ansaugt und über eine Ausblasöffnung des Gebläsegehäuses ausbläst, wobei die Motoreinheit einen Rotor umfasst, der mit dem Gebläserad in Wirkverbindung steht.

Andere vorteilhafte Weiterbildungen der Erfindung werden nachstehend zusammen mit der Beschreibung der bevorzugten Ausführung der Erfindung anhand der Figuren näher dargestellt. Es zeigen:
- Fig. 1: ein Ausführungsbeispiel eines erfindungsgemäßen Gebläserads in perspektivischer Ansicht;
- Fig. 2: das Gebläserad aus Figur 1.

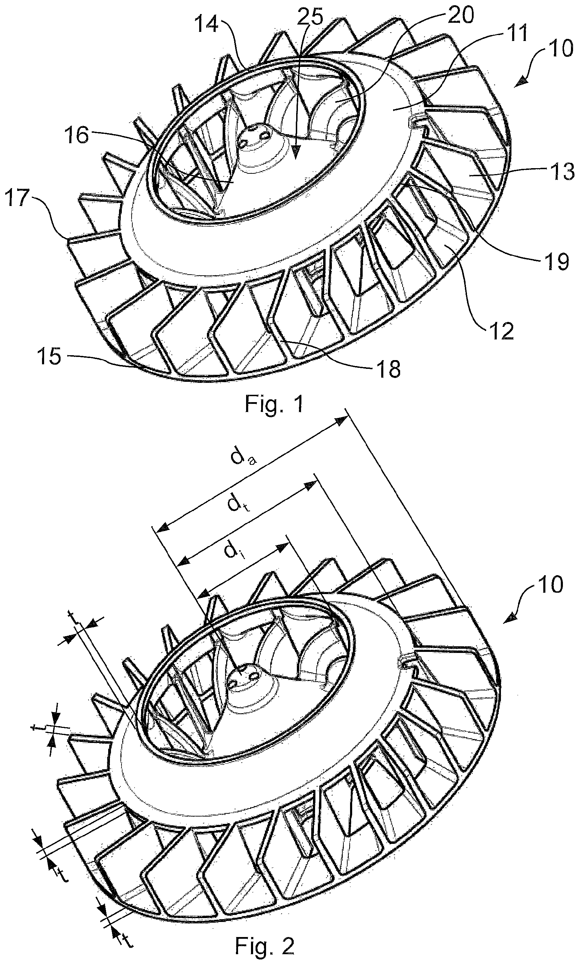

Die Figuren 1 und 2 zeigen ein einstückiges Gebläserad 10 mit einer Bodenscheibe 12 und einer Deckscheibe 11 zwischen denen ein Schaufelkranz mit mehreren in Umfangsrichtung verteilt angeordneten, gekrümmten Gebläseradschaufeln 13 gebildet ist. Die Deckscheibe 11 weist eine axiale Ansaugöffnung 25 mit einem Durchmesser di auf, verläuft in einem Radialschnitt gesehen trichterförmig gekrümmt und bildet an der Ansaugöffnung 25 eine Einlaufdüse. Der radial äußerste Abschnitt der Deckscheibe 11 sowie die gesamte Bodenscheibe 12 erstrecken sich jeweils parallel zu einer Axialebene, d.h. senkrecht zur Rotationsachse des Gebläserads 1.

Die Deckscheibe 11 weist an ihrem Umfangsrand 14, der die Ansaugöffnung 25 begrenzt, eine Dicke t auf, die der Dicke t der Gebläseradschaufeln 13 entspricht. Die Bodenscheibe 12 weist zumindest an ihrem radialen Außenrand 15 ebenfalls die Dicke t auf und schließt bündig in einer Ebene mit einer radialen Außenkante 18 der Gebläseradschaufeln 13 ab, die jeweils in einer Ebene parallel zur Rotationsachse des Gebläserads 1 verläuft. Die Materialdicke t der Boden- und Deckscheibe 12, 11 ist über ihre Gesamterstreckung von radial innen nach radial außen konstant.

Die Bodenscheibe 12 erstreckt sich von den radialen Außenkanten 18 der Gebläseradschaufeln 13 radial nach innen und überdeckt axiale Stirnseiten der Gebläseradschaufeln 13 unmittelbar und abschnittsweise, wobei sich die Boden- und Deckscheibe 12, 11 bei einer axialen Draufsicht in der Projektion gesehen nicht überlappen.

Strömungstechnisch und zur Lösung der technischen Aufgabe sind die Größenverhältnisse des Gebläserads 1 wesentlich. Die Bodenscheibe 12 bestimmt einen radialen maximalen Außendurchmesser da. Die Deckscheibe 11 erstreckt sich von dem die Ansaugöffnung 25 bildenden Umfangsrand 14 nach radial außen und weist einen maximalen Außendurchmesser dt auf. Das Verhältnis der Außendurchmesser dt/da ist in dem gezeigten Ausführungsbeispiel bei bevorzugten 0,74. Ferner ist das Verhältnis von di/dt bei einem Wert von 0,6. Die Maximalabweichung liegt bei ±0,3.

Die Deckscheibe 11 bildet den radial innen liegenden ansaugseitigen Teil des Gebläserads 1 und überdeckt abschnittsweise die Gebläseradschaufeln 13 im Bereich der Ansaugöffnung 25. Die Bodenscheibe 12 überdeckt die Gebläseradschaufeln 13 im radial außen liegenden Bereich. Die Gebläseradschaufeln 13 erstrecken sich ausgehend von dem radialen Au-ßenrand 19 der Deckscheibe 11 geradlinig, jedoch in Umfangsrichtung geneigt nach radial außen. Die axialen Stirnseiten 17 des Gebläseradschaufeln 13 auf einer der Bodenscheibe 12 gegenüberliegenden Seite enden frei und sind unbedeckt.

Das Gebläserad 10 weist ferner eine Nabe 16 auf, in welche die Gebläseradschaufeln 13 auf ihrer radialen Innenseite übergehen, wobei die radiale Innenkante 20 der Gebläseradschaufeln 13 bogenförmig verläuft.

## Patentansprüche

1. Gebläserad (1) in einer einstückigen Ausführung mit einer Bodenscheibe (12) und einer Deckscheibe (11) zwischen denen ein Schaufelkranz mit mehreren in Umfangsrichtung verteilt angeordneten Gebläseradschaufeln (13) gebildet ist, wobei die Bodenscheibe (12) einen radialen maximalen Außendurchmesser (da) bestimmt und die Deckscheibe (11) eine axiale Ansaugöffnung (25) mit einem Durchmesser (di) ausbildet, wobei die Deckscheibe (11) sich von dem die Ansaugöffnung (25) bildenden Umfangsrand (14) nach radial außen erstreckt und einen maximalen Außendurchmesser (dt) aufweist, **dadurch gekennzeichnet ,dass** ein Verhältnis der Außendurchmesser dt/da festgelegt ist in einem Bereich von 0,69 oder 0,74 mit jeweils einer maximalen Abweichung von ±0,03.

2. Gebläserad nach Anspruch 1, **dadurch gekennzeichnet, dass** sich die Gebläseradschaufeln (13) ausgehend von dem Umfangsrand (14) der Deckscheibe (11) nach radial außen erstrecken und die axialen Stirnseiten der Gebläseradschaufeln (13) auf einer der Bodenscheibe (12) gegenüberliegenden Seite sich unbedeckt nach radial außen erstrecken und jeweils ein freies Ende aufweisen.

3. Gebläserad nach einem der vorigen Ansprüche 1-2, **dadurch gekennzeichnet, dass** die Deckscheibe (11) in einem Radialschnitt gesehen trichterförmig gekrümmt verläuft und eine Einlaufdüse bildet.

4. Gebläserad nach einem der vorigen Ansprüche 1 - 3, **dadurch gekennzeichnet, dass** die Deckscheibe (11) an dem Umfangsrand (14), der die Ansaugöffnung (25) begrenzt eine Dicke aufweist, die einer Dicke der Gebläseradschaufeln (13) entspricht.

5. Gebläserad nach einem der vorigen Ansprüche 1 - 4, **dadurch gekennzeichnet, dass** die Bodenscheibe (12) zumindest an ihrem radialen Außenrand eine Dicke aufweist, welcher der Dicke der Gebläseradschaufeln (13) entspricht.

6. Gebläserad nach einem der vorigen Ansprüche 1 - 5, **dadurch gekennzeichnet, dass** ein radialer Außenrand der Deckscheibe (11) die Dicke der Gebläseradschaufeln (13) aufweist.

7. Gebläserad nach einem der vorigen Ansprüche 1 - 6, **dadurch gekennzeichnet, dass** die Boden- und/oder die Deckscheibe (12, 11) eine konstante Materialdicke aufweisen.

8. Gebläserad nach einem der vorigen Ansprüche 1 - 7, **dadurch gekennzeichnet, dass** ein Verhältnis des Durchmessers der axialen Ansaugöffnung (di) und des maximalen Außendurchmessers (dt) der Deckscheibe di/dt in einem Bereich von 0,5 bis 0,7 ist.

9. Gebläserad nach einem der vorigen Ansprüche 1 - 8, **dadurch gekennzeichnet, dass** radiale Innenkanten der Gebläseradschaufeln (13) bogenförmig verlaufen.

10. Gebläserad nach einem der vorigen Ansprüche 1 - 9, **dadurch gekennzeichnet, dass** es eine Nabe (16) aufweist, in welche die Gebläseradschaufeln (13) auf ihren radialen Innenseite übergehen.

11. Gebiäserad nach einem der vorigen Ansprüche 1 - 10, **dadurch gekennzeichnet, dass** sich ein radial äußerster Abschnitt der Deckscheibe (11) und die Bodenscheibe (12) parallel zu einer Axialebene erstrecken.

12. Gebläserad nach einem der vorigen Ansprüche 1 - 11, **dadurch gekennzeichnet, dass** sich die Bodenscheibe (12) und die Deckscheibe (11) in einer axialen Draufsicht, in der Projektion gesehen, überlappungsfrei zueinander erstrecken.

13. Gebläse ausgebildet als Gas-Luft-Vormischgebläse zur Förderung eines Gas-Luft-Gemisches, umfassend ein mehrteiliges Gebläsegehäuse und eine außenseitig angeordnete Motoreinheit mit Motorelektronik, wobei innerhalb des Gebläsegehäuses ein Gebläserad (1) gemäß einem der vorigen Ansprüche angeordnet ist, das im Betrieb Luft über eine Ansaugöffnung des Gebläsegehäuses ansaugt und über eine Ausblasöffnung des Gebläsegehäuses ausbläst auszublasen, wobei die Motoreinheit einen Rotor umfasst, der mit dem Gebläserad (1) in Wirkverbindung steht.

## Claims

1. Blower wheel (1) in an integral design having a bottom disk (12) and a cover disk (11) between which a blade ring is formed having multiple blower wheel blades (13) disposed in the circumferential direction at a spacing from one another, wherein the bottom disk (12) defines a maximum radial diameter (da) and the cover disk (11) forms an axial intake opening (25) having a diameter (di), wherein the cover disk (11) extends radially outwards from the circumferential edge (14) which forms the intake opening (25) and has a maximum outer diameter (dt), **characterized in that** the outer diameter ratio dt/da is set to a range of 0.69 or 0.74 with a respective maximum variation of ±0.03.

2. Blower wheel according claim 1, **characterized in that** the blower wheel blades (13) start from the circumferential edge (14) of the cover disk (11) and extend radially outwards, and the axial front sides of the blower wheel blades (13) are uncovered and extend radially outwards on a side opposite the bottom disk (12) and comprise a free end each.

3. Blower wheel according to one of the preceding claims 1 - 2, **characterized in that** the cover disk (11), viewed in a radial section, is curved in a funnel-shaped manner and forms an inlet nozzle.

4. Blower wheel according to one of the preceding claims 1 - 3, **characterized in that** the cover disk (11) has at its circumferential edge (14), which defines the intake opening (25), a thickness which corresponds to the thickness of the blower wheel blades (13).

5. Blower wheel according to one of the preceding claims 1 - 4, **characterized in that** the bottom disk (12), at least at its radially outer edge, has a thickness that corresponds to the thickness of the blower wheel blades (13).

6. Blower wheel according to one of the preceding claims 1 - 5, **characterized in that** a radial outer edge of the cover disk (11) has the thickness of the blower wheel blades (13).

7. Blower wheel according to one of the preceding claims 1 - 6, **characterized in that** the bottom and/or cover disk (12, 11) have a constant material thickness.

8. Blower wheel according to any one of the preceding claims 1 - 7, **characterized in that** a ratio of the diameter of the axial intake opening (di) and the maximum outer diameter (dt) of the cover disk di/dt is in a range from 0.5 to 0.7.

9. Blower wheel according to any one of the preceding claims 1 - 8, **characterized in that** radial inner edges of the blower wheel blades (13) are arc-shaped.

10. Blower wheel according to any one of the preceding claims 1 - 9, **characterized in that** it comprises a hub (16) into which the blower wheel blades (13) transition on their radially inner sides.

11. Blower wheel according to any one of the preceding claims 1 - 10, **characterized in that** the outermost radial section of the cover disk (11) and the bottom disk (12) extend parallel to an axial plane.

12. Blower wheel according to any one of the preceding claims 1 - 11, **characterized in that** the bottom disk (12) and the cover disk (11) extend without overlapping relative to one another in an axial top view, as viewed in a projection.

13. Blower formed as a gas-air premix blower for delivering a gas-air mixture, including a multi-part blower housing and a motor unit with motor electronics disposed on its outer side, wherein a blower wheel (1) having the features described above is disposed inside said blower housing which, when in operation, draws in air via an intake opening of the blower housing and blows out air via a blowout opening of the blower housing, wherein the motor unit includes a rotor which is in operative connection with the blower wheel (1).

## Revendications

1. Roue de ventilateur (1) dans un mode de réalisation en une seule pièce avec un disque de fond (12) et un disque de recouvrement (11) entre lesquels une couronne d'aubes avec plusieurs aubes de roue de ventilateur (13) réparties dans la direction circonférentielle est formée, dans laquelle le disque de fond (12) détermine un diamètre extérieur maximum radial (da) et le disque de recouvrement (11) forme une ouverture d'aspiration axiale (25) d'un diamètre (di), dans laquelle le disque de recouvrement (11) s'étend radialement vers l'extérieur depuis le bord circonférentiel (14) formant l'ouverture d'aspiration (25) et présente un diamètre extérieur maximum (dt), **caractérisée en ce qu'**un rapport des diamètres extérieurs dt/da est défini dans une plage de 0,69 ou 0,74 avec respectivement un écart maximum de ±0,03.

2. Roue de ventilateur selon la revendication 1, caractérisée les aubes de roue de ventilateur (13) s'étendent radialement vers l'extérieur à partir du bord circonférentiel (14) du disque de recouvrement (11) et les côtés frontaux axiaux des aubes de roue de ventilateur (13) s'étendent non recouverts radialement vers l'extérieur sur un côté opposé au disque de fond (12) et présentent respectivement une extrémité libre.

3. Roue de ventilateur selon l'une quelconque des revendications précédentes 1-2, **caractérisée en ce que** le disque de recouvrement (11) s'étend incurvé en forme d'entonnoir vu dans une coupe radiale et forme une buse d'entrée.

4. Roue de ventilateur selon l'une quelconque des revendications précédentes 1-3, **caractérisée en ce que** le disque de recouvrement (11) présente au niveau du bord circonférentiel (14), qui délimite l'ouverture d'aspiration (25), une épaisseur qui correspond à une épaisseur des aubes de roue de ventilateur (13).

5. Roue de ventilateur selon l'une quelconque des revendications précédentes 1-4, **caractérisée en ce que** le disque de fond (12) présente au moins au niveau de son bord extérieur une épaisseur, laquelle correspond à l'épaisseur des aubes de roue de ventilateur (13).

6. Roue de ventilateur selon l'une quelconque des revendications précédentes 1-5, **caractérisée en ce qu'**un bord extérieur radial du disque de recouvrement (11) présente l'épaisseur des aubes de roue de ventilateur (13).

7. Roue de ventilateur selon l'une quelconque des revendications précédentes 1-6, **caractérisée en ce que** le disque de fond et/ou de recouvrement (12, 11) présentent une épaisseur constante de matériau.

8. Roue de ventilateur selon l'une quelconque des revendications précédentes 1-7, **caractérisée en ce qu'**un rapport du diamètre de l'ouverture d'aspiration axiale (di) et du diamètre extérieur maximum (dt) du disque de recouvrement di/dt est dans une plage de 0,5 à 0,7.

9. Roue de ventilateur selon l'une quelconque des revendications précédentes 1-8, **caractérisée en ce que** des arêtes intérieures radiales des aubes de roue de ventilateur (13) s'étendent en forme d'arc.

10. Roue de ventilateur selon l'une quelconque des revendications précédentes 1-9, **caractérisée en ce qu'**elle présente un moyeu (16), dans lequel passent les aubes de roue de ventilateur (13) sur leur côté intérieur radial.

11. Roue de ventilateur selon l'une quelconque des revendications précédentes 1-10, **caractérisée en ce qu'**une section radialement la plus extérieure du disque de recouvrement (11) et le disque de fond (12) s'étendent parallèlement à un plan axial.

12. Roue de ventilateur selon l'une quelconque des revendications précédentes 1-11, **caractérisée en ce que** le disque de fond (12) et le disque de recouvrement (11) s'étendent dans une vue de dessus axiale, vu dans la projection, l'un par rapport à l'autre sans chevauchement.

13. Ventilateur réalisé en tant que ventilateur de prémélange gaz-air pour le transport d'un mélange gaz-air, comprenant un boîtier de ventilateur à plusieurs parties et une unité moteur agencée côté extérieur avec une électronique de moteur, dans lequel une roue de ventilateur (1) selon l'une quelconque des revendications précédentes, qui aspire en fonctionnement l'air par le biais d'une ouverture d'aspiration du boîtier de ventilateur et le souffle pour souffler par le biais d'une ouverture de soufflage du boîtier de ventilateur, est agencée à l'intérieur du boîtier de ventilateur, dans lequel l'unité moteur comprend un rotor, qui est en liaison active avec la roue de ventilateur (1).
